# EUROPÄISCHE PATENTANMELDUNG

(11) **EP 1 884 849 A2**
(43) Veröffentlichungstag der Anmeldung: **06.02.2008**
(21) Anmeldenummer: 07012723.8
(22) Anmeldetag: 28.06.2007
(51) Int. Cl.: G05B 19/4097

(54) **Verfahren und Steuerung zum Verputzen eines Fensterrahmenprofils mit einem Putzautomaten**

(30) Priorität: 26.07.2006 DE 102006034592
(71) Anmelder: KMW-Engineering GmbH, 08248 Klingenthal (DE)
(72) Erfinder: Karbstein, André, 08248 Klingenthal (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zum Verputzen eines Fensterrahmenprofils aus Kunststoff mit einem durch eine Steuerung gesteuerten Putzautomaten sowie eine Steuerung eines Putzautomaten zum Verputzen eines Fensterrahmenprofils aus Kunststoff. Es ist die Aufgabe der vorliegenden Erfindung, ein Verfahren und eine Steuerung der genannten Gattung zur Verfügung zu stellen, mit welchem es einem Bearbeiter erleichtert wird, einem Putzautomaten die notwendigen Informationen zum Verputzen eines Fensterrahmenprofils zur Verfügung zu stellen, wobei auch bei häufig wechselnden Profilen unterschiedliche Fensterrahmenprofile schnell erfasst werden können und mit hoher Genauigkeit an dem Putzautomaten bearbeitet werden können. Diese Aufgabe wird durch ein Verfahren zum Verputzen eines Fensterrahmenprofils aus Kunststoff mit einem durch eine Steuerung gesteuerten Putzautomaten gelöst, bei welchem die Steuerung auf Grundlage einer Datei arbeitet, die eine Kontur des Fensterrahmenprofils als Grafik enthält, durch einen Bearbeiter aus der Grafik wenigstens eine von dem Putzautomaten zu bearbeitende Strecke ausgewählt und markiert wird, und aus der wenigstens einen markierten Strecke von der Steuerung eine Programmsequenz erstellt wird, mit welcher der Putzautomat gesteuert wird. Die Aufgabe wird ferner durch eine Steuerung eines Putzautomaten zum Verputzen eines Fensterrahmenprofils aus Kunststoff gelöst, bei welcher die Steuerung eine Datei aufweist, die eine Kontur des Fensterrahmenprofils als Grafik enthält, wobei die Steuerung einen Zeiger aufweist, mit dem wenigstens eine von dem Putzautomaten zu bearbeitende Strecke ausgewählt werden kann, die Steuerung einen Speicher aufweist, mit dem die ausgewählte Strecke gespeichert werden kann, und wobei die Steuerung eine Software aufweist, die die Daten der markierten Strecke in einer Programmsequenz für den Putzautomaten an den Putzautomaten übermittelt.

## Beschreibung

Die vorliegende Erfindung betrifft ein Verfahren zum Verputzen eines Fensterrahmenprofils aus Kunststoff mit einem durch eine Steuerung gesteuerten Putzautomaten sowie eine Steuerung eines Putzautomaten zum Verputzen eines Fensterrahmenprofils aus Kunststoff.

Bei der Herstellung von Fensterrahmen aus Kunststoff ist es bekannt, diese mit automatischen Putzvorrichtungen, insbesondere an den verschweißten Fensterecken, zu verputzen. Dabei werden beim Verschweißen von Fensterrahmenprofilen entstehende Kanten und Grate entfernt, so dass Fensterrahmen mit optisch sauberen Schweißnähten zur Verfügung gestellt werden können.

Um das Verputzen automatisiert durchführen zu können, werden die hierfür eingesetzten Putzautomaten mittels einer softwarekontrollierten Steuerung gesteuert. Hierfür ist es bei jedem neuen zu bearbeitenden Fensterrahmenprofil notwendig, durch den Bearbeiter mit Hilfe von Koordinaten Punkt für Punkt die durch den Putzautomaten abzufahrende Strecke der Kontur des Fensterrahmenprofils einzugeben. Der Bearbeiter erstellt dabei ein Programm für den Putzautomaten, bei welchem er ausgehend von einem Punkt, den er als Nullpunkt definiert, entsprechende Abstände der abzufahrenden Kontur abliest oder errechnet und die daraus resultierenden Koordinaten entsprechend der Reihenfolge der Abarbeitung nach in eine Liste einträgt. Aus dieser Liste kann letztlich die abzufahrende Kontur als eine Abbildung eines reinen Streckenverlaufs nachgezeichnet werden, ohne dass der Bearbeiter einen Bezug von dieser Abbildung zu der tatsächlichen Kontur des zu bearbeitenden Kunststoffprofils erhält. Entsprechend hat der Bearbeiter aus dieser Abbildung auch keine Kontrollmöglichkeit, ob die von ihm anhand von Werten eingegebene Streckenverlauf richtig ist.

Es ist daher die Aufgabe der vorliegenden Erfindung, ein Verfahren und eine Steuerung der oben genannten Gattung zur Verfügung zu stellen, mit welchem es einem Bearbeiter erleichtert wird, einem Putzautomaten die notwendigen Informationen zum Verputzen eines Fensterrahmenprofils zur Verfügung zu stellen, wobei auch bei häufig wechselnden Profilen unterschiedliche Fensterrahmenprofile schnell erfasst werden können und mit hoher Genauigkeit an dem Putzautomaten bearbeitet werden können.

Diese Aufgabe wird durch ein Verfahren zum Verputzen eines Fensterrahmenprofils aus Kunststoff mit einem durch eine Steuerung gesteuerten Putzautomaten gelöst, bei welchem die Steuerung auf Grundlage einer Datei arbeitet, die eine Kontur des Fensterrahmenprofils als Grafik enthält, durch einen Bearbeiter aus der Grafik wenigstens eine von dem Putzautomaten zu bearbeitende Strecke ausgewählt und markiert wird, und aus der wenigstens einen markierten Strecke von der Steuerung eine Programmsequenz erstellt wird, mit welcher der Putzautomat gesteuert wird.

Im Gegensatz zu der Vorgehensweise bei bereits bekannten Steuerungen geht das erfindungsgemäße Verfahren nicht von einzelnen von einem Bearbeiter zu ermittelnden Koordinaten des Fensterrahmenprofils aus, um eine abzufahrende Strecke daraus zu konstruieren woraus wiederum eine Abbildung der abzufahrenden Strecke erstellt werden kann, sondern entnimmt aus einer bereits vorhandenen Grafik des Fensterrahmenprofils die Daten, die zum Verputzen des Fensterrahmenprofils notwendig sind. Die Daten können hierbei durch einfaches Markieren der zu bearbeitenden Strecken in die Programmsequenz für den Putzautomaten aufgenommen werden, ohne dass der Bearbeiter die Koordinaten der Anfangs- und Endpunkte der abzufahrenden Strecken oder deren Abstände voneinander kennen oder errechnen muss. Da durch die Grafik die auswählbaren und markierbaren Strecken genau definiert sind, kann durch den Bearbeiter auch kein Fehler in die Programmsequenz eingebaut werden, so dass der Putzautomat fehlerfrei den von dem Bearbeiter markierten Bereich des Fensterrahmenprofils verputzen kann.

Da Dateien mit unterschiedlichen Fensterrahmenprofilen problemlos in die Steuerung eingelesen werden können und der Bearbeiter durch einfaches Auswählen und Markieren der zu bearbeitenden Strecke einfach und schnell die zu bearbeitende Kontur des Fensterrahmenprofils vorgeben kann, kann der Putzautomat variabel und schnell auf die Bearbeitung verschiedener Fensterrahmenprofile eingestellt werden, wodurch unterschiedlichste Fensterrahmenprofile mit hoher Effektivität und Genauigkeit verputzt werden können.

Gemäß einer vorteilhaften Ausführungsform der Erfindung weist die Steuerung eine Werkzeugliste auf, aus welcher wenigstens ein Werkzeug zum Bearbeiten der markierten Strecke ausgewählt wird, und die Programmsequenz so erstellt wird, dass der Putzautomat zum Bearbeiten der markierten Strecke das ausgewählte Werkzeug verwendet. Damit hat der Bearbeiter die Möglichkeit, unterschiedliche ausgewählte und markierte Strecken mit unterschiedlichen Werkzeugen durch den Putzautomaten bearbeiten zu lassen. Beispielsweise können verschiedene Messer, Sägen, Bohrer, Fräser oder andere Werkzeuge ausgewählt werden, um die markierte Strecke mit dem Putzautomaten zu bearbeiten.

Entsprechend einer günstigen Weiterbildung der Erfindung wird die Kontur des Fensterrahmenprofils als DXF-Datei in die Steuerung eingelesen. DXF, auch Drawing Interchange Format oder Drawing Exchange Format genannt, ist ein spezifiziertes Dateiformat, das zum CAD-Datenaustausch geeignet ist. Mit Hilfe von DXF-Dateien können Fensterrahmenprofile in Form von CAD-Modellen als Text nach dem Standard-ASCII abgelegt werden. Da DXF-Daten mit vielen Grafikprogrammen erstellt werden können oder in diese importiert werden können, eignen sich derartige Dateien besonders gut, um in dem erfindungsgemäßen Verfahren verwendet zu werden. Grundsätzlich ist es jedoch auch möglich, andere Dateitypen, mit welchen ein Fensterrahmenprofil als Grafik darstellbar ist, in dem erfindungsgemäßen Verfahren zu verwenden.

Es hat sich zudem als vorteilhaft erwiesen, wenn die Programmsequenz in Form eines G-Codes erzeugt wird. Mit einem G-Code können insbesondere CNC-Maschinen vorteilhaft gesteuert werden. Beispielsweise kann mit einem G-Code dem Putzautomaten mitgeteilt werden, mit welcher Geschwindigkeit zu arbeiten ist, ob ein Werkzeug des Putzautomaten gerade oder in einem Bogen bewegt werden soll, ob ein Loch zu bohren ist, ob ein Werkstück auf bestimmte Abmessungen zu schneiden oder abzurunden ist oder ob zusätzliche Profilelemente in das Werkstück einzubringen sind. Zudem kann mit Hilfe eines G-Codes der Putzautomat völlig rückgestellt werden bzw. mit einem neuen Programmablauf instruiert werden. G-Codes werden außerdem von einer Vielzahl von CAM-System verstanden, so dass das erfindungsgemäße Verfahren zu mit anderen Vorrichtungen oder Verfahren kompatibel gestaltet werden kann.

Entsprechend einer vorteilhaften Variante der Erfindung werden mehrere markierte Strecken logisch miteinander verknüpft. Auf diese Weise kann mit Hilfe des erfindungsgemäßen Verfahrens ein komplexer Arbeitsablauf zum Verputzen des Fensterrahmenprofils zur Verfügung gestellt werden.

Es ist besonders günstig, wenn vor einem Abspeichern der logischen Verknüpfung eine Kollisionskontrolle erfolgt. Somit kann vermieden werden, dass die ausgewählten Werkzeuge während des Verputzens nicht mit dem Fensterrahmenprofil kollidieren.

Gemäß einem vorteilhaften Beispiel der Erfindung wird ein Fahrtweg des Werkzeugs an die zu bearbeitende Kontur des Fensterrahmenprofils und an das Werkzeug angepasst. Der Fahrtweg des Werkzeugs kann sich dabei durchaus von der zu bearbeitenden Kontur unterscheiden. So kann beispielsweise der Fahrtweg des Werkzeugs, wie zum Beispiel eines Sägeblattes, an eine Dicke des Werkzeuges angepasst werden, so dass das Fensterrahmenprofil hochgenau bearbeitet werden kann.

Entsprechend einer weiteren Variante der Erfindung wird eine Schneide des Werkzeugs an die zu bearbeitende Kontur des Fensterrahmenprofils angepasst. So kann beispielsweise die Schneide in Abhängigkeit von der zu bearbeitenden Kontur des Fensterrahmenprofil ausgewechselt werden, wodurch eine hochgenaue und effektive Bearbeitung des Fensterrahmenprofils gewährleistet werden kann.

Es ist besonders günstig, wenn auf einem Bildschirm die zu bearbeitende Kontur mit einem Startpunkt und einem Endpunkt für die Bearbeitung angezeigt wird. Auf diese Weise kann der Bearbeiter die ausgewählte zu bearbeitende Kontur des Fensterrahmenprofils optisch nachvollziehen. Sind mehrere Strecken ausgewählt worden, kann der Bearbeiter auf dem Bildschirm die ausgewählten Strecken in ihrer Gesamtheit sehen, so dass er daran überprüfen kann, ob die eingegebenen Angaben richtig und vollständig sind, wobei noch vor Beginn eines Verputzvorgangs Korrekturen vorgenommen werden können. Zudem kann der Bearbeiter eine logische Verknüpfung der von ihm eingegebenen Strecken nachvollziehen und gegebenenfalls Start- und Endpunkt der Bearbeitung ändern oder austauschen.

Die Aufgabe wird ferner durch eine Steuerung eines Putzautomaten zum Verputzen eines Fensterrahmenprofils aus Kunststoff gelöst, bei welcher die Steuerung eine Datei aufweist, die eine Kontur des Fensterrahmenprofils als Grafik enthält, wobei die Steuerung einen Zeiger aufweist, mit dem wenigstens eine von dem Putzautomaten zu bearbeitende Strecke ausgewählt werden kann, die Steuerung einen Speicher aufweist, mit dem die ausgewählte Strecke gespeichert werden kann, und wobei die Steuerung eine Software aufweist, die die Daten der markierten Strecke in einer Programmsequenz für den Putzautomaten an den Putzautomaten übermittelt.

Mit Hilfe der erfindungsgemäßen Steuerung können selbst komplizierte zu verputzende Bereiche eines Fensterrahmenprofils dem Putzautomaten einfach und schnell übermittelt werden. So kann ein Bearbeiter, der durch die erfindungsgemäße Steuerung die Kontur des zu bearbeitenden Fensterrahmenprofils als Grafik sichtbar zur Verfügung gestellt bekommt, mit Hilfe des Zeigers auf einfache Weise eine oder mehrere zu bearbeitende Strecken auswählen, welche Daten von der Steuerung in einen durch den Putzautomaten einfach zu interpretierenden Code automatisch übersetzt werden, so dass die Daten schnell und fehlerfrei an den Putzautomaten übermittelt werden können.

Gemäß einer bevorzugten Ausführungsform der Erfindung weist die Steuerung eine Werkzeugliste auf, aus welcher wenigstens ein Werkzeug zum Bearbeiten der markierten Strecke auswählbar ist. Damit besteht die Möglichkeit, in einem Verputzvorgang verschiedene Werkzeuge in Abhängigkeit von der zu bearbeitenden Kontur des Fensterrahmenprofils einzusetzen.

Günstigerweise ist die Datei, auf deren Grundlage die Steuerung arbeitet, eine DXF-Datei. DXF-Dateien eignen sich besonders gut, um Konturen unterschiedlicher Fensterrahmenprofile als definierte Grafiken abzulegen. Zudem können von den Herstellern der Fensterrahmenprofile solche DXF-Dateien auf einfache Weise erstellt werden und damit der Steuerung zur Verfügung gestellt werden.

Es ist zudem von Vorteil, wenn die Steuerung einen durch die Software erzeugten G-Code zur Bearbeitung des Fensterrahmenprofils aufweist. Mit Hilfe des G-Codes lassen sich verschiedene Funktionen des Putzautomaten auf effektive und einfach nachvollziehbare Art und Weise steuern, so dass ein gutes Putzergebnis erzielt werden kann.

Gemäß einem weiteren Beispiel der Erfindung weist die Steuerung einen Bildschirm auf, über welchen die zu bearbeitende Strecke eingebbar ist, über welchen ein Werkzeug auswählbar ist und/oder auf welchem die zu bearbeitende Kontur anzeigbar ist. Durch den Bildschirm kann der Bearbeiter besonders gut die Steuerung bedienen und sich über den aktuellen Status des von der Steuerung ausgeführten Programms informieren, wobei er durch die optische Anzeige auf einfache Weise eventuelle Fehler erkennen und/oder Änderungen im Programmablauf vornehmen kann.

Im Folgenden wird die Erfindung anhand vorteilhafter Ausführungsformen, welche in den Figuren der Zeichnungen dargestellt sind, näher erläutert. Dabei zeigen
- Figur 1: eine schematische Darstellung eines Putzautomaten mit einer erfindungsgemäßen Steuerung;
- Figur 2: eine schematische Darstellung eines Beispiels für einen möglichen Ablauf des erfindungsgemäßen Verfahrens;
- Figur 3: eine mögliche Bildschirmansicht für ein Laden und Speichern einer Produktdatei;
- Figur 4: eine mögliche Bildschirmansicht mit einer Anzeige einer Produktgrafik und einer Werkzeugliste;
- Figur 5: eine mögliche Bildschirmansicht, auf welcher eine Auswahl von Konturabschnitten für eine Wahl eines Bearbeitungswerkzeuges dargestellt ist;
- Figur 6a: ein Beispiel für eine durch die Steuerung festgelegte Bearbeitungsrichtung;
- Figur 6b: ein Beispiel für eine invertierte Bearbeitungsrichtung;
- Figur 7a: eine Konturverfolgung für eine Säge;
- Figur 7b: eine Konturverfolgung für einen Bohrer;
- Figur 8a: ein Beispiel für eine Markierung zu löschender Objekte;
- Figur 8b: eine Anzeige der Kontur aus Figur 8a nach dem Entfernen der markierten Objekte; und
- Figur 9a und 9b: ein Einfügen eines Linienobjektes zwischen ausgewählten Konturabschnitten.

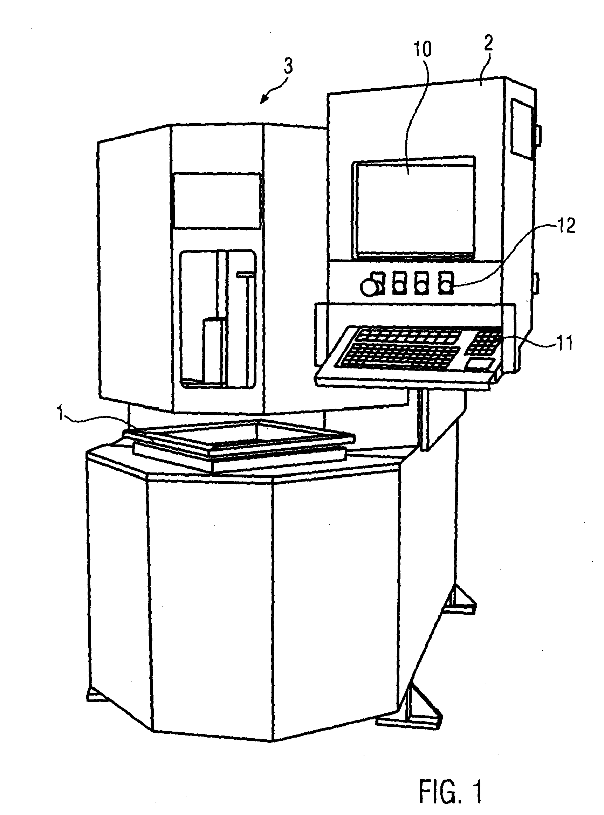

Figur 1 zeigt schematisch einen für die vorliegende Erfindung verwendeten Grundaufbau mit einem Eckenputzautomaten 3 für Fensterrahmen aus Kunststoff, einschließlich der erfindungsgemäßen Steuerung 2. Auch wenn die vorliegende Erfindung anhand eines Eckenputzautomaten erläutert wird, ist sie auch für Putzautomaten geeignet, die Schweißwülste an PVC-Fensterrahmen oder ähnlichen Profilrahmen an geraden oder kreisförmigen Übergängen zwischen verschweißten Profilelementen entfernen.

Zur Veranschaulichung der Funktionsweise des Eckenputzautomaten 3 liegt auf einer Bearbeitungsfläche des Putzautomaten 3 ein vorher an seinen Ecken verschweißtes Fensterrahmenelement 1 auf. Der Eckenputzautomat 3 dient dem Abstechen der Schweißwülste auf beiden Seiten des spiegelgeschweißten PVC-Fensterrahmenelementes 1. Dies kann wahlweise oberflächenbündig oder mit Schattennut ausgeführt sein. Zudem werden durch den Eckenputzautomaten 3 die Schweißwülste an den Außenecken des Fensterrahmenelementes 1 mit einem Scheibenfräser verputzt.

Der Eckenputzautomat 3 ist in einem stabilen Schweißgestell integriert. Als Servoachsen zur Steuerung der von dem Eckenputzautomaten 3 verwendeten Bearbeitungswerkzeuge 6 werden Linearmotoren eingesetzt, was eine sehr hohe Prozessgeschwindigkeit und Wiederholgenauigkeit der für das Verputzen der Fensterrahmenelemente 1 verwendeten Arbeitsgänge erlaubt.

Die Steuerung 2 ist eine NC-Steuerung. Die Programmierung der hierbei verwendeten NC-Programme erfolgt über eine grafische Oberfläche mit visualisiertem NC-Kurven, welche auf einem Bildschirm 10 darstellbar sind. Eingaben können hierbei durch eine Tastatur 11, durch Bedienknöpfe 12, eine Maus oder andere geeignete Eingabemechanismen vorgenommen werden.

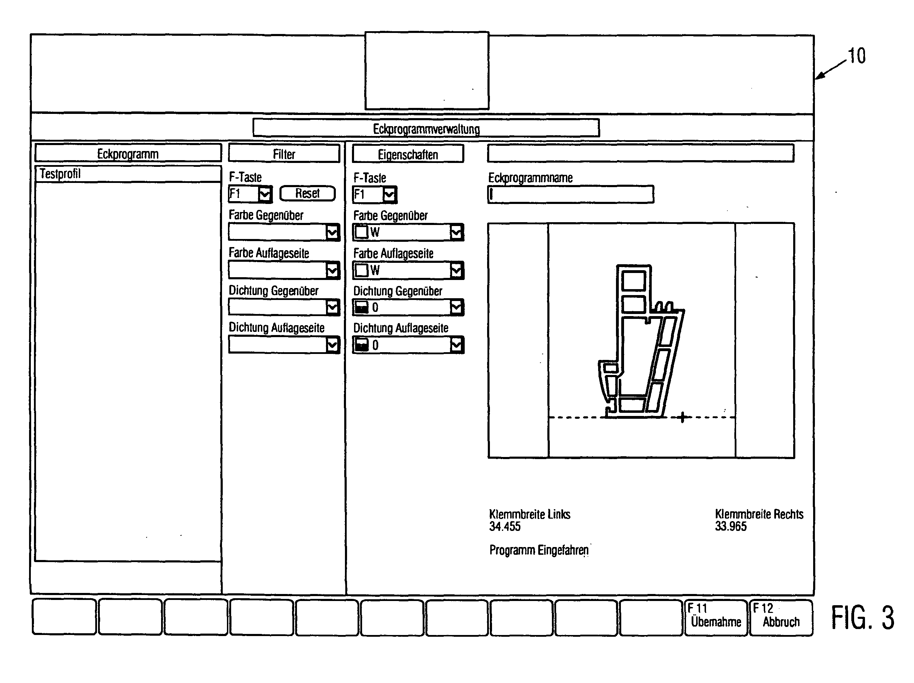

Auf dem Bildschirm 10 sind verschiedene Bedienseiten anzeigbar, wovon ausgewählte Beispiele möglicher Bildschirmanzeigen in den Figuren 3 bis 9 näher erläutert sind. Die Oberfläche der Steuerung 2 erlaubt die Bedienung der notwendigen Funktionen zum Einrichten und Programmieren der Arbeitsläufe bzw. Bearbeitungsprogramme an dem Putzautomaten 3. Weiterhin werden zusätzlich aktuelle Betriebszustände des Eckenputzautomaten 3 angezeigt.

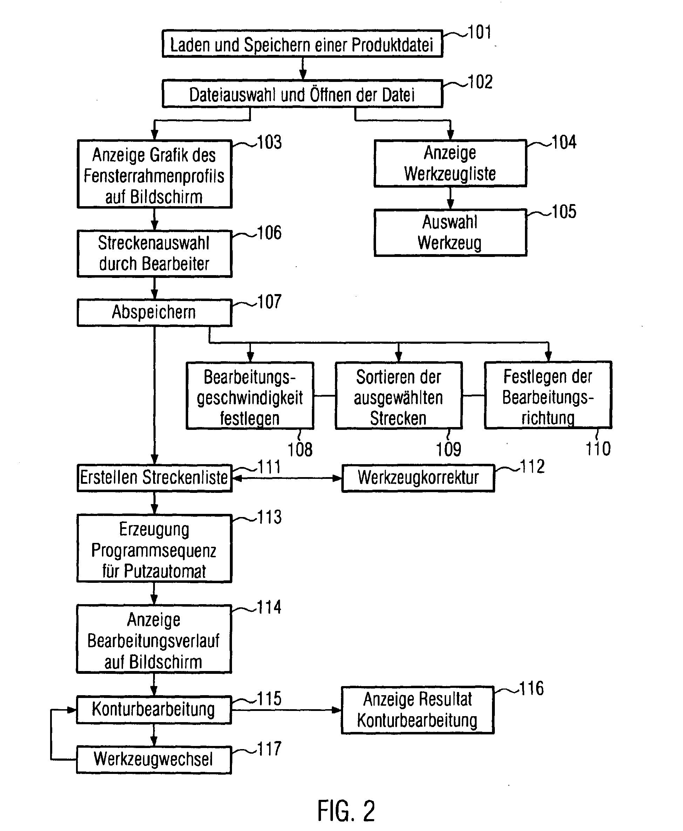

Figur 2 zeigt schematisch ein Beispiel für einen möglichen Ablauf des erfindungsgemäßen Verfahrens.

Im Schritt 101 von Figur 2 wird eine Produktdatei, die die wesentlichen Abmessungen eines zu bearbeitenden Fensterrahmenprofils 1 enthält, in die Steuerung 2 geladen und darin gespeichert.

Ein Beispiel für einen möglichen Bildschirmaufbau für das Laden einer Produktdatei ist in Figur 3 gezeigt. Wie in Figur 3 links dargestellt, können hierbei in einem Scrollmenü verschiedene Produktdateien, beispielsweise unter einem Punkt "Eckprogramm", übersichtsartig dargestellt werden, wobei von einem Bearbeiter eine Produktdatei ausgewählt werden kann. Durch Anklicken der gewünschten Produktdatei erscheint auf dem Bildschirm 10, wie in Figur 3 rechts gezeigt, das Profil des zu bearbeitenden Fensterrahmenelementes bzw. des Produktes als Grafik. Durch Betätigen eines entsprechenden Feldes in der Menüleiste kann daraufhin die Produktdatei geladen werden.

Die Produktdatei kann im Folgenden durch verschiedene Menüpunkte des Programmeditors der Steuerung 2 bearbeitet werden.

Entsprechend Schritt 102 von Figur 2 kann die gewünschte Produktdatei in einem Auswahlmenü der Steuerung 2 geöffnet werden. Die Datei ist vorteilhafter Weise eine DXF-Datei, kann aber in anderen Ausführungsformen der Erfindung auch ein anderes Format besitzen, aus welchem das Profil des zu bearbeitenden Fensterrahmenelementes erkennbar ist.

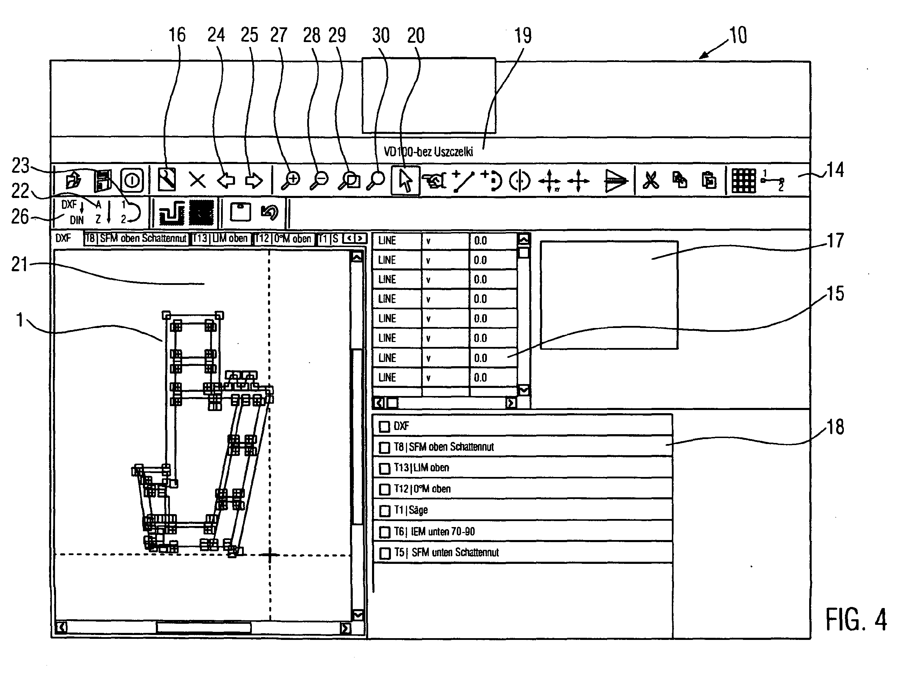

Nach dem Öffnen der gewünschten Datei wird gemäß Schritt 103 von Figur 2, wie in Figur 4 dargestellt, die Profilkontur des ausgewählten Fensterrahmenelementes 1 auf dem Bildschirm 10 grafisch dargestellt. Wie in Figur 4 links gezeigt, ist die Profilkontur des Fensterrahmenelementes 1 dabei in eine Vielzahl von Strecken bzw. Konturabschnitten 4 mit Anfangspunkten 8 und Endpunkten 9 unterteilt.

Anhand einer Menüleiste 14 kann die Produktdatei, wenn erforderlich, bearbeitet werden. Über ein Icon 16 in der Menüleiste 14 kann eine Werkzeugliste aufgerufen werden.

Gemäß Schritt 104 von Figur 2 ist, wie in Figur 4 rechts angedeutet, auf dem Bildschirm 10 über eine graphische Anzeige 17 die Werkzeugliste darstellbar. Die Werkzeugliste enthält eine Reihe durch den Eckenputzautomaten 3 zur Verfügung stellbarer Werkzeuge 6, wie Sägen bzw. Außeneckenfrässcheiben, Dichtnutfräser, Sichtflächenmesser, Inneneckenmesser, Scheibenfräser, Stulpfräser, Hohlmesser und/oder Bohrer. Über umschaltbare Reiter können aus der Werkzeugliste die programmierten Werkzeuge 6 im Schritt 106 von Figur 2 ausgewählt werden.

In der in Figur 4 dargestellten Tabelle 15 sind alle Strecken 4 mit Angabe ihrer Koordinaten, wie Start- und Endpunkten 8, 9, und einer festgelegten Verfahrgeschwindigkeit angegeben.

In einem Listenfeld 18 erscheint eine Auswahlliste für eine Anzeige aller erstellten, werkzeugspezifischen Tourabschnitte und der ausgewählten DXF-Datei. Durch ein Feld 19 wird der Name des aktuell zu bearbeitenden Programms oder Profils angezeigt.

Parallel zu der oben beschriebenen Werkzeugauswahl kann der Bearbeiter gemäß Schritt 106 von Figur 2 bestimmte Strecken 4 aus der auf dem Bildschirm 10 dargestellten Profilkontur des Fensterrahmenelementes 1 auswählen. Der Bearbeiter markiert hierfür beispielsweise durch Betätigen der in Figur 4 mit einem Pfeil gekennzeichneten Taste 20 einzelne Konturabschnitte bzw. Strecken 4 in der Grafik der Profilkontur des Fensterrahmenelementes 1.

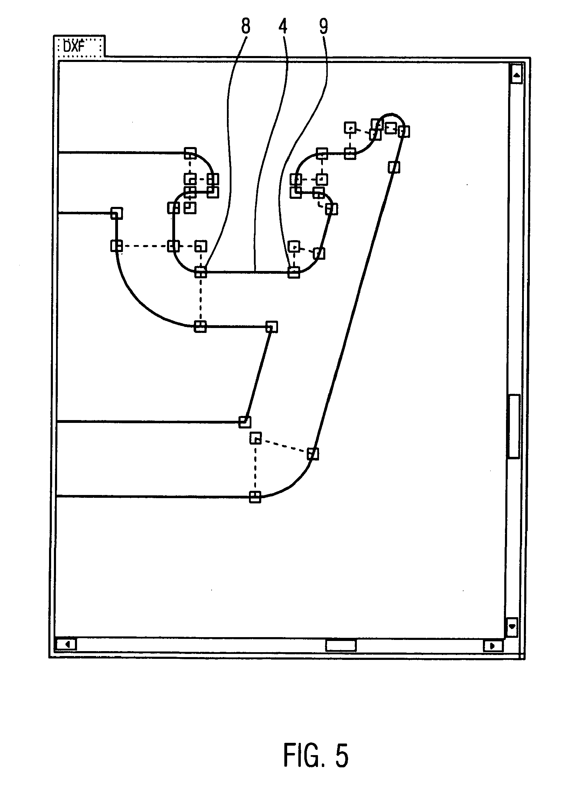

Figur 5 zeigt eine mögliche Bildschirmansicht, auf welcher eine Auswahl von Konturabschnitten 4 für eine Wahl eines Bearbeitungswerkzeuges 6 dargestellt ist, wobei die jeweils ausgewählten Strecken 4 auf dem Bildschirm 10 mit stärkerer Intensität oder farbig hervorgehoben sind. Diejenigen ausgewählten Teilabschnitte, die nicht miteinander verbunden sind, können durch Betätigen einer Taste, beispielsweise der "STRG"-Taste, miteinander verbunden werden.

Durch Betätigen einer Taste, wie dem Werkzeug-Icon 16 in Figur 4, kann dem selektierten Abschnitt der Profilkontur ein Werkzeug 6 zugewiesen werden. Nach Auswahl eines Werkzeuges 6 und Betätigen einer Taste zur Übernahme des Werkzeugs 6 wird ein neuer Reiter in der in Figur 4 gezeigten Grafikanzeige erzeugt. Dieser Reiter repräsentiert den Ablauf eines Konturabschnittes in der Profilbearbeitung. Das ausgewählte Werkzeug 6 wird dann über die grafische Anzeige 17 auf dem Bildschirm 10 angezeigt.

Parallel hierzu werden gemäß Schritt 107 von Figur 2 die ausgewählten Strecken 4 bzw. die selektierten Teilabschnitte der Profilkontur des Fensterrahmenelementes 1 abgespeichert.

Gemäß Schritt 108 von Figur 2 kann dem ausgewählten Konturabschnitt über das in Figur 4 dargestellte Eingabemenü eine Bearbeitungsgeschwindigkeit v zugewiesen werden. Die Geschwindigkeit v wird für alle Teilabschnitte des Konturbereiches übernommen. Die Festlegung der Geschwindigkeit v kann über eine in Figur 4 dargestellte Tabellenanzeige 21 dargestellt werden. Eine Änderung der Geschwindigkeit v eines Objektes innerhalb der Tabellenanzeige 21 bezieht sich dann ausschließlich auch auf dieses Objekt. Dadurch können beispielsweise kreis- oder linienförmige Konturen mit unterschiedlichen Geschwindigkeiten verknüpft werden.

Nach dem Auswählen und Abspeichern einzelner Strecken bzw. Konturabschnitte 4 des Profils sind diese nicht sortiert. Durch Betätigen einer weiteren Taste im Eingabemenü, wie der Taste 22 in Figur 4, können die ausgewählten Strecken bzw. Konturabschnitte 4 sortiert und ausgerichtet werden. Innerhalb dieses Sortierschrittes wird durch einen Algorithmus die Reihenfolge der ausgewählten Objekte bzw. Konturabschnitte 4 durch die Steuerung 2 getestet, wobei nicht zusammenhängende Teilabschnitte 4 gelöscht werden.

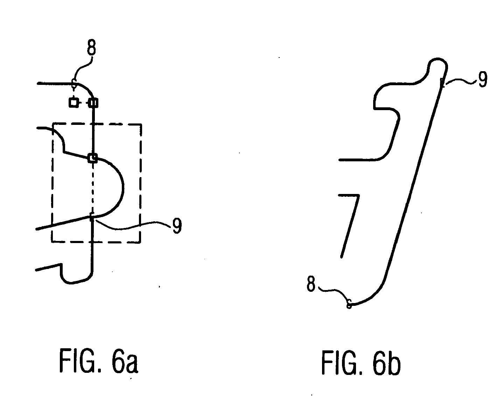

Die Bearbeitungsrichtung der Profilkontur oder eines Profilabschnittes kann durch eine Festlegung des Start- und Endpunktes der Bearbeitung definiert werden. Dabei kann beispielsweise durch eine Taste im Eingabemenü, wie der Taste 23 in Figur 4, die Abarbeitungsrichtung einer sortierten Kontur auch invertiert werden. Ein Beispiel für eine durch die Steuerung 2 festgelegte Bearbeitungsrichtung ist in Figur 6a dargestellt. Figur 6b zeigt ein Beispiel für eine invertierte Bearbeitungsrichtung, in welcher der Startpunkt 8 und der Endpunkt 9 der Bearbeitung miteinander vertauscht wurden.

Aus den oben genannten Eingaben wird daraufhin durch die Steuerung 2 gemäß Schritt 111 von Figur 2 eine Streckenliste mit den Daten der auszuwählenden Konturabschnitte 4, des ausgewählten Werkzeugs 6, der festgelegten Geschwindigkeit v und der festgelegten Bearbeitungsrichtung erstellt.

Werden Werkzeuge 6, wie eine Säge oder ein Bohrer verwendet, kann mittels einer innerhalb der Steuerung 2 vorgesehenen Werkzeugkorrektur ein Unterprogramm durch eine Konturverfolgung erzeugt werden. Bei der Konturverfolgung wird mittels eines mathematischen Algorithmus die Geometrie des ausgewählten Werkzeuges 6 und die Kontur des Profils berücksichtigt und dabei eine optimale Werkzeugbahn für das Werkzeug 6 ermittelt, die keine Konturverletzung des zu bearbeitenden Profils zulässt.

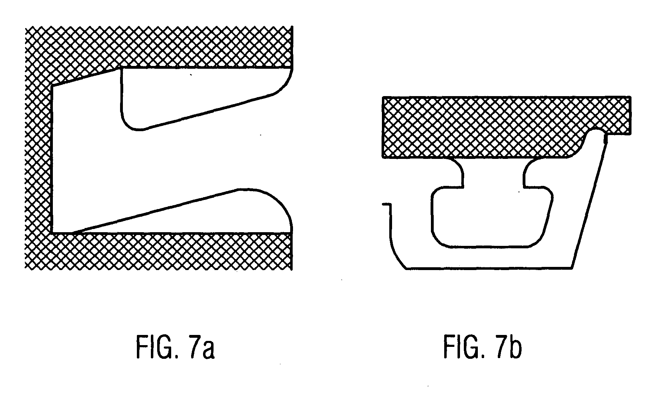

Zur Veranschaulichung der Optionen der Werkzeugkorrektur zeigt Figur 7a eine Konturverfolgung für eine Säge. Figur 7b zeigt eine Konturverfolgung für einen Bohrer. Die in den Figuren 7a und 7b dunkel markierten Bereiche entsprechen dabei der von dem jeweiligen Werkzeug abzufahrenden Werkzeugbahn. So können für die zu bearbeitenden Konturabschnitte 4 mit Hilfe der von der Steuerung 2 vorgesehenen Werkzeugkorrektur, die in Figur 2 im Schritt 112 vorgesehen ist, werkzeugrelevante Unterprogramme in dem gemäß Schritt 111 erzeugten G-Code erzeugt werden.

Soll ein Werkzeug 6 mehrere unterschiedliche Konturabschnitte 4 bearbeiten, muss für jeden Konturabschnitt 4 ein Unterprogramm erzeugt werden. Hierfür kann ein Bearbeiter in dem Werkzeugauswahlmenü der Steuerung 2 eine neue Werkzeugkontur festlegen. Die Abarbeitungsreihenfolge der Streckenliste wird auf dem Bildschirm 10 vorzugsweise durch eine Anordnung von Reitern, beispielsweise von links nach rechts, dargestellt. Werden die Reiter, beispielsweise mit Hilfe der Tasten 24, 25 in Figur 4 verschoben, kann die Abarbeitungsreihenfolge geändert werden.

Nach Erstellung der Streckenliste im Schritt 111 wird mittels eines Moduls der Steuerung 2 gemäß Schritt 113 von Figur 2 durch Betätigen einer Taste im Eingabemenü, wie der Taste 26 in Figur 4, ein DIN-Programm aus den markierten DXF-Daten erzeugt. Dabei erstellt die Steuerung 2 ein Bild des Bearbeitungsverlaufs, welcher gemäß Schritt 114 von Figur 2 angezeigt werden kann. Der Bearbeiter hat dabei die Möglichkeit, zwischen der aktuellen Ansicht einer bestimmten Werkzeugkontur in Form einer DXF-Datei und dem dazugehörigen DIN-Programm zu wechseln.

Das DIN-Programm ist vorzugsweise ein G-Code, welcher aus konkreten Befehlen für den Eckenputzautomaten 3 besteht. Beim Erstellen des G-Codes werden die durch den Bearbeiter eingegebenen Daten logisch miteinander verknüpft, so dass beispielsweise aneinander angrenzende Strecken 4 in der Programmsequenz für den Putzautomaten 3 miteinander verbunden werden. Hierbei führt die Steuerung 2 automatisch eine Kollisionskontrolle durch, um zu verhindern, dass die Werkzeuge (6) mit dem Fensterrahmenprofil bei der Abarbeitung kollidieren. Die Kollisionskontrolle überprüft, ob ein Werkzeug während seiner normalen Positionierung in irgendeiner Weise durch das Profil fahren würde. Ist dies der Fall, erfolgt automatisch eine Umstellung des Fahrtweges des Werkzeuges.

Mittels weiterer Tasten, wie der Tasten 27 bis 30 aus Figur 4, hat der Bearbeiter zudem die Möglichkeit, einen ausgewählten Ausschnitt der zu bearbeitenden Kontur auf dem Bildschirm 10 zu vergrößern oder zu verkleinern, um diesen besser sichtbar zu machen und damit die Eingabe zu erleichtern.

Möchte der Bearbeiter Änderungen an dem Bearbeitungsverlauf vornehmen, kann er durch das Betätigen einer hierfür vorgesehenen Taste zum Programmeditor entsprechend der Bildschirmanzeige von Figur 4 wechseln, wobei er den zu ändernden Konturabschnitt durch Anwahl des zugehörigen Reiters in der grafischen Ansicht auswählen kann. Durch Betätigen einer weiteren Taste besteht die Möglichkeit, weitere Strecken oder Objekte 4 in den ausgewählten Konturabschnitt einzufügen oder nicht zu bearbeitende Objekte 4 durch Betätigen einer anderen Taste zu entfernen.

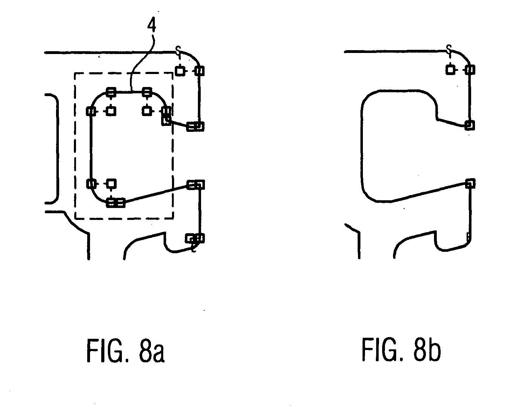

Figur 8a zeigt ein Beispiel für eine Markierung zu löschender Objekte 4, wobei der zu löschende Bereich in der Abbildung durch eine Strichpunktlinie kenntlich gemacht ist. Figur 8b zeigt eine Anzeige der Kontur aus Figur 8a nach dem Entfernen der markierten Objekte 4.

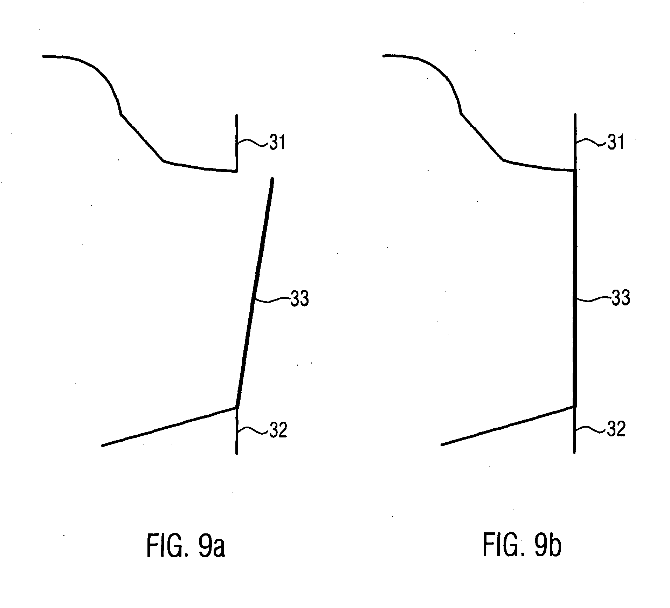

Um einen zusammenhängenden, zu bearbeitenden Konturabschnitt zu erzeugen, werden, wie in Figur 9a schematisch dargestellt, jeweils zwei Teilabschnitte 31, 32 mit einem Linienobjekt 33 verbunden. Dazu wird durch Betätigen einer entsprechenden Taste in den Einfügemodus für Linienobjekte gewechselt. Ein Einrasten des neuen Linienobjektes 33 zwischen den Teilabschnitten 31 und 32 wird durch Betätigen einer bestimmten Taste und/oder der Maus erreicht. Figur 9b zeigt das Ergebnis des Einfügens eines Linienobjektes mit einer Einrastfunktion. Hierbei ist es wiederum möglich, mit Hilfe der Taste 22 die erzeugte zusammenhängende Kontur zu sortieren oder mit Hilfe der Taste 23 die Abarbeitungsrichtung zu ändern.

Weiterhin besitzt der Bearbeiter die Möglichkeit, mehrere Objekte 4 eines Konturabschnittes mit Hilfe eines Verschiebemodus zu verschieben. Verschobene Objekte 4 können in der grafischen Anzeige auf dem Bildschirm 10 dargestellt werden.

Anstelle der oben beschriebenen Linienobjekte 4 können auch Kreisbogenobjekte zwischen zwei ausgewählte Konturabschnitte eingefügt werden. Hierbei können wahlweise die Ausrichtung des Kreisbogenobjektes oder auch der Radius des Kreisobjektes durch einfaches Markieren des Kreismittelpunktes und Aktivieren des Verschiebemodus geändert werden.

Ist der G-Code für den Putzautomaten 3 erstellt, kann gemäß Schritt 115 von Figur 2 die Bearbeitung der Kontur des Fensterrahmenelementes 1 erfolgen. Das Resultat der Konturbearbeitung kann gemäß Schritt 116 in Figur 2 auf dem Bildschirm 10 angezeigt werden.

Mit Hilfe der oben beschriebenen Funktion der erfindungsgemäßen Steuerung 2 kann ein Bearbeiter auf einfache Weise in kurzer Zeit aus dem durch die DXF-Datei vorgegebenen Bild die zu bearbeitenden Konturabschnitte 4 auswählen und gemäß den jeweiligen Erfordernissen abändern, ohne die konkreten Abmessungen oder Koordinaten der Eckpunkte des Profils kennen zu müssen. Anhand der grafischen Darstellung erkennt er leicht, welche Abschnitte der Kontur bearbeitet werden müssen, wählt diese durch einfaches Anklicken aus und die Steuerung 2 erzeugt automatisch ein entsprechendes Programm, das von dem Eckenputzautomaten 3 zur Bearbeitung des Profils verwendet werden kann. Hierfür nutzt die Steuerung 2 die in der Grafik- bzw. DXF-Datei vorgegebenen Eckdaten des Profils und setzt diese automatisch in einen maschinenlesbaren G-Code um. Selbst wenn der Bearbeiter Änderungen am Programm vornehmen will, muss er nicht den G-Code selbst ändern, sondern kann die Änderungen anhand der vorgegebenen Grafik auf dem Bildschirm 10 auf einfache Weise markieren, wobei die Änderungen durch einfaches Betätigen von Tasten oder per Mausklick automatisch durch die Steuerung 2 in das von dem Eckenputzautomaten 3 auszuführende Programm überführt werden.

Indem ein Bearbeiter den für das Bearbeiten des Profils erforderlichen G-Code nicht selbst erzeugen oder ändern muss, können manuelle Fehler im Programm eliminiert werden, wodurch eine zeitintensive Fehlersuche vermieden werden kann.

Zudem kann die erfindungsgemäße Steuerung 2 für nahezu alle möglichen Profilvarianten und Werkzeuge 6 angewendet werden, wobei auch komplizierte Geometrien von Profilen oder Werkzeugen berücksichtigt werden können.

Weiterhin ist, wie durch Schritt 117 von Figur 2 angedeutet, problemlos ein Werkzeugwechsel während der Programmabarbeitung vorsehbar, wonach, wie in Schritt 115 von Figur 2 gezeigt, die Konturbearbeitung durch den Eckenputzautomaten 3 fortgesetzt werden kann.

## Patentansprüche

1. Verfahren zum Verputzen eines Fensterrahmenprofils (1) aus Kunststoff mit einem durch eine Steuerung (2) gesteuerten Putzautomaten (3), **dadurch gekennzeichnet, dass** die Steuerung (2) auf Grundlage einer Datei arbeitet, die eine Kontur des Fensterrahmenprofils (1) als Grafik enthält, wobei durch einen Bearbeiter aus der Grafik wenigstens eine von dem Putzautomaten (3) zu bearbeitende Strecke (4) ausgewählt und markiert wird, und aus der wenigstens einen markierten Strecke (4) von der Steuerung (2) eine Programmsequenz erstellt wird, mit welcher der Putzautomat (3) gesteuert wird.

2. Verfahren nach Anspruch 1, **dadurch gekennzeichnet, dass** die Steuerung (2) eine Werkzeugliste aufweist, aus welcher wenigstens ein Werkzeug (6) zum Bearbeiten der markierten Strecke (4) ausgewählt wird, und die Programmsequenz so erstellt wird, dass der Putzautomat (3) zum Bearbeiten der wenigstens einen markierten Strecke (4) das ausgewählte Werkzeug (6) verwendet.

3. Verfahren nach Anspruch 1 oder 2, **dadurch gekennzeichnet, dass** die Kontur des Fensterrahmenprofils (1) als DXF-Datei in die Steuerung (2) eingelesen wird.

4. Verfahren nach einem der vorhergehenden Ansprüche, **dadurch gekennzeichnet, dass** die Programmsequenz in Form eines G-Codes erzeugt wird.

5. Verfahren nach einem der vorhergehenden Ansprüche, **dadurch gekennzeichnet, dass** mehrere markierte Strecken (4) logisch miteinander verknüpft werden.

6. Verfahren nach Anspruch 5, **dadurch gekennzeichnet, dass** vor einem Abspeichern der logischen Verknüpfung eine Kollisionskontrolle erfolgt.

7. Verfahren nach Anspruch 2, **dadurch gekennzeichnet, dass** ein Fahrtweg des Werkzeugs (6) an die zu bearbeitende Kontur des Fensterrahmenprofils (1) und an das Werkzeug (6) angepasst wird.

8. Verfahren nach Anspruch 2 oder 7, **dadurch gekennzeichnet, dass** eine Schneide des Werkzeugs (6) an die zu bearbeitende Kontur des Fensterrahmenprofils (1) angepasst wird.

9. Verfahren nach einem der vorhergehenden Ansprüche, **dadurch gekennzeichnet, dass** auf einem Bildschirm (10) die zu bearbeitende Kontur des Fensterrahmenprofils (1) mit einem Startpunkt (8) und einem Endpunkt (9) für die Bearbeitung angezeigt wird.

10. Steuerung (2) eines Putzautomaten (3) zum Verputzen eines Fensterrahmenprofils (1) aus Kunststoff, **dadurch gekennzeichnet, dass** die Steuerung (2) eine Datei aufweist, die eine Kontur des Fensterrahmenprofils (1) als Grafik enthält,
dass die Steuerung (2) einen Zeiger aufweist, mit dem wenigstens eine von dem Putzautomaten (3) zu bearbeitende Strecke (4) ausgewählt werden kann,
dass die Steuerung (2) einen Speicher aufweist, mit dem die wenigstens eine ausgewählte Strecke (4) gespeichert werden kann, und
dass die Steuerung (2) ein Modul aufweist, das die Daten der wenigstens einen markierten Strecke (4) in einer Programmsequenz für den Putzautomaten (3) an den Putzautomaten (3) übermittelt.

11. Steuerung nach Anspruch 10, **dadurch gekennzeichnet, dass** die Steuerung (2) eine Werkzeugliste aufweist, aus welcher wenigstens ein Werkzeug (6) zum Bearbeiten der wenigstens einen markierten Strecke (4) auswählbar ist.

12. Steuerung nach Anspruch 10 oder 11, **dadurch gekennzeichnet, dass** die Datei eine DXF-Datei ist.

13. Steuerung nach einem der Ansprüche 10 bis 12, **dadurch gekennzeichnet, dass** die Steuerung (2) einen durch die Software erzeugten G-Code zur Bearbeitung des Fensterrahmenprofils (1) aufweist.

14. Steuerung nach einem der Ansprüche 10 bis 13, **dadurch gekennzeichnet, dass** die Steuerung (2) einen Bildschirm aufweist, über welchen die zu bearbeitende Strecke (4) eingebbar ist, über welchen ein Werkzeug (6) auswählbar ist und/oder auf welchem die zu bearbeitende Kontur anzeigbar ist.
